# EUROPÄISCHE PATENTSCHRIFT

(11) **EP 3 336 019 B1**
(45) Veröffentlichungstag und Bekanntmachung des Hinweises auf die Patenterteilung: **18.03.2026**
(21) Anmeldenummer: 17200341.0
(22) Anmeldetag: 07.11.2017
(51) Int. Cl.: B65G 23/44, B65G 15/14, B08B 9/08

(54) **JUSTIEREINRICHTUNG**
ADJUSTMENT DEVICE
APPAREIL D'AJUSTAGE

(30) Priorität: 07.11.2016 DE 102016121253
(43) Veröffentlichungstag der Anmeldung: 20.06.2018
(73) Patentinhaber: Ludwig Bohrer Maschinenbau GmbH, 93128 Regenstauf (DE)
(72) Erfinder: BOHRER, Georg, 93128 Regenstauf (DE)
(74) Vertreter: Hannke Bittner & Partner mbB Regensburg

(56) Entgegenhaltungen:
- CN-U- 201 817 034
- DE-A1- 10 316 630
- GB-A- 2 189 757
- JP-A- S59 143 805
- JP-U- H0 729 348
- JP-U- S5 655 206
- JP-U- S55 147 309
- US-A1- 2007 009 310
- US-B1- 6 185 394

## Beschreibung

Die vorliegende Erfindung bezieht sich auf eine Justiereinrichtung zum Spannen von Transportmitteln einer Transportvorrichtung nach dem Oberbegriff des Anspruchs 1.

Insbesondere bezieht sich die Transportvorrichtung auf einen sogenannten Kastenwascher, der zum Reinigen von Getränkebehältnissen dient. Es wird jedoch darauf hingewiesen, dass die hier beschriebene Erfindung auch für andere Transporteinrichtungen Anwendung finden kann und insbesondere für Transporteinrichtungen zum Transportieren von Kästen, Kisten, Behältnissen, Gebinden und dergleichen.

Kastenwascher sind aus dem Stand der Technik seit langem bekannt. Dabei werden die zu reinigenden Getränkekästen beispielsweise durch ein Tauchbad transportiert und anschließend mit einem Wendeförderer transportiert, wobei sie gleichzeitig um 180 Grad gedreht werden. Zum Transport dieser Getränkekästen werden dabei üblicherweise beidseits der Getränkekästen Transportketten eingesetzt, welche die zu transportierenden Getränkekästen zwischen sich einklemmen und auf diese Weise sicher halten. Zu diesem Zweck werden teilweise umlaufende Transportketten eingesetzt, an denen wiederum Halteelemente lösbar befestigt sind.

Die JP S59 143805 A zeigt einen Endlosriemen durch Bereitstellung einer Vielzahl von Riemenscheiben, um die der Endlosriemen gewickelt ist, wobei eine dieser Riemenscheiben eine Spannrolle ist, die in einem System zum Transport einer Palette mit einem Paar Endlosriemen elastisch in eine Richtung gedrängt wird.

JP H07 29348 U betrifft eine Vorrichtung zur automatischen Einstellung der Spannung eines Förderbandes in einem Banknotenförderer.

US 2007/009310 A1 zeigt eine Bilderzeugungsvorrichtung, welche eine Haupteinheit; einen Bildträgerkörper; eine Riemeneinheit; und einen Mechanismus zum Aufbringen der Spannung umfasst. Die Riemeneinheit ist abnehmbar in der Haupteinheit angebracht und hat ein Paar von Stützrollen, die einen Endlosriemen darauf tragen. Der Endlosriemen hat eine innere Umfangsseite, die dem Paar von Stützrollen gegenüberliegt, und eine äußere Umfangsseite, die der inneren Umfangsseite gegenüberliegt. Die äußere Umfangsseite eines Teils des Endlosbandes, der zwischen dem Stützrollenpaar entlang einer Anordnungsrichtung definiert ist, in der das Stützrollenpaar angeordnet ist, liegt dem Bildträgerkörper gegenüber, wenn die Bandeinheit in der Haupteinheit montiert ist. Der Mechanismus zum Aufbringen der Spannung ist in der Haupteinheit vorgesehen. Wenn die Riemeneinheit in der Haupteinheit montiert ist, drückt der Mechanismus zum Aufbringen der Spannung eine Stützrolle des Stützrollenpaares in eine Richtung, in der die eine Stützrolle von der anderen Stützrolle getrennt wird, wodurch Spannung auf den Endlosriemen aufgebracht wird.

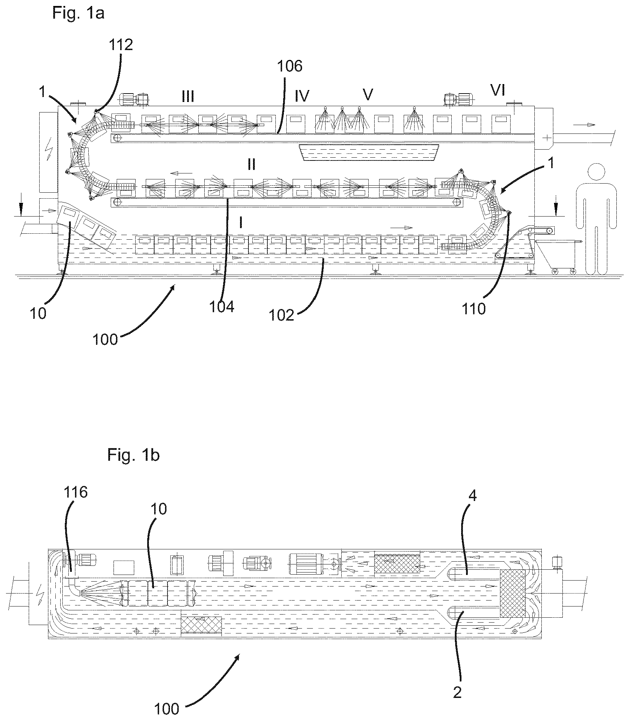

Die JP S56 55206 U betrifft eine Verbesserung einer Vorrichtung zum Spannen eines Gurtes, mit der ein Gurt gespannt werden kann. Als Vorrichtung zum Aufbringen der Spannung auf einen Riemen in einer Riemenfördereinrichtung wird üblicherweise eine Vorrichtung verwendet, wie sie in FIG. 1 dargestellt ist. In dieser Vorrichtung ist die Umlenkrolle so konstruiert, dass sie sich frei um den Zugarm, die Spitze, die obere Kfi-Konstante & j2/A-Armwelle, und die Umlenkrolle drehen kann. Die oben genannte Basis wird in einem angemessenen Abstand vom Zugarm auf der Rundführung und dem Zugarm mit einer Zugspule (beide Enden von montiert.

Die US 6 185 394 B1 offenbart eine Justiereinrichtung mit den Merkmalen des Oberbegriffs des Anspruchs 1. Das genannte Dokument zeigt ein Verfahren zum Einstellen einer Spannung, die auf ein Fotorezeptorband in einer Druckvorrichtung aufgebracht wird, beinhaltet das Einstellen der Spannung, die auf das Fotorezeptorband aufgebracht wird, gemäß mindestens drei Modi, einschließlich eines normalen Druckmodus, bei dem die Spannung auf das Fotorezeptorband für einen Druckvorgang durch Drücken der Spannrolle in eine vorbestimmte Richtung aufgebracht wird, einen Modus mit gelockerter Spannung, bei dem die Spannung des Fotorezeptorbandes durch Verringern des auf die Spannrolle ausgeübten Drucks während der Unterbrechung des Druckvorgangs gelockert wird, und einen Modus zum Auswechseln des Bandes, bei dem die Spannung des Fotorezeptorbandes zum Auswechseln des Fotorezeptorbandes durch Aufheben des auf die Spannrolle ausgeübten Drucks gelöst wird. Das Umschalten der Betriebsart in jede Betriebsart umfasst das Betreiben eines Antriebsmotors, der eine Spannungseinstelleinheit antreibt, um die Spannung des Fotorezeptorbandes einzustellen; das Erfassen der Position der Spannungseinstelleinheit; das Erkennen einer Betriebsart, die der Position der Spannungseinstelleinheit entspricht; und das Anhalten des Antriebsmotors, um den Betrieb der Spannungseinstelleinheit anzuhalten, wenn die Betriebsart, in die umgeschaltet werden soll, erkannt wird. Daher kann der Modus während der Unterbrechung des Druckvorgangs in den Modus mit gelockerter Spannung umgeschaltet werden, so dass die Spannung des Fotorezeptorbandes ohne Beschädigung des Fotorezeptorbandes gelockert werden kann. Dadurch kann eine teilweise Versteifung und Faltung des Fotorezeptorbandes an seinem gebogenen Abschnitt verhindert werden.

Die GB 2 189 757 A zeigt, dass bei Kettenförderern es notwendig ist, die Kette unter optimaler Spannung zu halten und plötzliche Spannungsstöße zu vermeiden, während gleichzeitig sichergestellt werden muss, dass die Kettenabstreifer/Reinigungsleiste in unmittelbarer Nähe der Umlenkräder gehalten wird. Das Lagergehäuse kann relativ zum Förderer gleiten, und zwar mit Hilfe von Längsbolzen, über die komprimierbare Federn gestülpt sind, um die Anfangsspannung der Kette zu erreichen. Die Spannung wird durch eine Sperrklinkenanordnung aufrechterhalten, die über eine Platte mit den Bolzen verbunden ist. Eine L-förmige Platte ist über die Platte am Lagergehäuse befestigt und erstreckt sich durch die Seite der Umlenkstruktur des Förderers. Die Platte trägt an ihrem den Rillenrädern benachbarten Ende eine kombinierte Kettenabstreifer-/Rillenreinigerplatte.

Die DE 103 16 630 A1 zeigt, dass der Förderer ein Endlosband hat, das über die vordere und hintere Welle läuft und über die vordere Welle angetrieben wird, die einen Durchmesser zwischen 60 mm und 120 mm hat. Der Durchmesser des mittleren Teils der Welle ist ca. 2-3,5mm, insbesondere 2,4-3,5mm, vorzugsweise 2,8mm größer als der Durchmesser der beiden Endteile. Eine Zentrierwelle befindet sich im Umlenkbereich des Riemens, vor der hinteren Welle und in einem Winkel zur Ebene des Riemens. Die hintere Welle ist Teil einer Spannvorrichtung für den Riemen. Diese besteht aus einem Spannschieber mit zwei Anschlägen und einem Federelement.

JP S55 147309 U betrifft eine automatische Spannvorrichtung, bei der eine Kette oder ein Riemen für einen Förderer oder dergleichen mittels einer Feder immer automatisch mit einer geeigneten Spannung beaufschlagt wird.

Die CN 201 817 034 U offenbart einen doppellagigen Bandfördermechanismus, der einen höhenverstellbaren Rahmen umfasst, der mit einem oberen Förderer und einem unteren Förderer versehen ist. Der obere Förderer und der untere Förderer passen zueinander; ein oberer Positionierungsblock und ein unterer Positionierungsblock sind jeweils auf dem oberen Förderer und dem unteren Förderer befestigt und entsprechen einander; und eine höhenverstellbare Positionierungsstange ist zwischen dem oberen Positionierungsblock und dem unteren Positionierungsblock montiert. Der zweischichtige Bandfördermechanismus ist genial im strukturellen Design, kann die Funktionen des Anhebens, Absaugens, Verdichtens, Formens und dergleichen für Materialien, die einmal zwischen dem oberen Förderer und dem unteren Förderer durchlaufen, ausführen und ist bequem im Betrieb und hoch in der Verarbeitungseffizienz.

Beim Einsatz von Transportketten tritt das Problem auf, dass diese sich im Laufe ihrer Lebenszeit ändern, beispielsweise dehnen. Dies wiederum führt zu einem ungewollt hohen Spiel dieser Transportketten. Um dem zu begegnen, sind aus dem Stand der Technik Justierelemente bekannt, mit denen der Benutzer diese Transportketten manuell Nachspannen kann. Dieses Nachspannen ist teilweise ein aufwändiger Prozess, insbesondere da bei Anwendungen in einem Kastenwascher die Transportketten teilweise unter Wasser bzw. innerhalb eines Tauchbads liegen.

Der vorliegenden Erfindung liegt daher die Aufgabe zugrunde, eine Vorrichtung zur Verfügung zu stellen, welche diesen Prozess des Justierens einfacher gestaltet. Diese Aufgabe wird erfindungsgemäß durch eine Justiereinrichtung nach Anspruch 1 erreicht. Vorteilhafte Ausführungsformen und Weiterbildungen sind Gegenstand der Unteransprüche.

Eine beispielhafte Transportvorrichtung zum Transportieren von Gütern und insbesondere von Verpackungen, Getränkekästen und dergleichen weist eine erste Transporteinrichtung auf, welche ein erstes umlaufendes Transportmittel aufweist, sowie eine zweite Transporteinrichtung, welche ein zweites umlaufendes Transportmittel aufweist, wobei die zu transportierenden Güter zwischen diesen umlaufenden Transportmitteln aufnehmbar sind, um von diesen transportiert zu werden. Dabei ist jedes dieser Transportmittel um wenigstens zwei Umlenkräder geführt und es ist wenigstens eine Justiereinrichtung vorgesehen, um eine Position wenigstens eines dieser Umlenkräder zu justieren und/oder zu verstellen.

Erfindungsgemäß weist die Justiereinrichtung einen verschiebbaren Träger auf, an welchem das Umlenkrad drehbar angeordnet ist, sowie ein erstes Spannmittel, welches diesen Träger in einer vorgegebenen Richtung vorspannt.

Es wird damit eine automatische Justiereinrichtung vorgeschlagen, welche bevorzugt nicht von einem Benutzer nachjustiert werden muss.

Das erste Spannmittel spannt den Träger in einer Richtung vor, welche eine Spannung des Transportmittels erhöht und/oder ein mechanisches Spiel zwischen beispielsweise einzelnen Gliedern des Transportmittels verringert. Dabei wirkt das Spannmittel auf das Stellglied und dieses wiederum auf den Träger.

Die beispielhafte Transportvorrichtung kann Führungs- und/oder Stützmittel zum Führen des umlaufenden Transportmittels aufweisen. Vorteilhaft weist die Transporteinrichtung wenigstens eine Führungsschiene zum Führen des umlaufenden Transportmittels auf. So kann beispielsweise eine Führungsschiene vorgesehen sein, in welcher wenigstens ein Abschnitt des umlaufenden Transportmittels, beispielsweise ein Abschnitt der Kettenelemente läuft. Diese Führungsschiene kann dabei derart ausgeführt sein, dass sie Bestandteile des Trägers hintergreift, so dass das Transportmittel nicht aus der Führungsschiene herausfallen kann und sich im Wesentlichen nur ein einer Richtung gegenüber der Transportschiene bewegt.

Bei einer weiteren vorteilhaften Ausführungsform der beispielhaften Transportvorrichtung handelt es sich bei wenigstens einem Umlenkrad um ein Zahnrad. Vorteilhaft handelt es sich bei beiden Umlenkrädern um Zahnräder. Bevorzugt lenkt das wenigstens eine Umlenkrad eine Transportrichtung des Transportmittels um einen Winkel von mehr als 90 Grad, bevorzugt von mehr als 120 Grad, bevorzugt von mehr als 150 Grad und besonders bevorzugt von mehr als 170 Grad um. Bei einer vorteilhaften Ausführungsform ist je Transporteinrichtung nur genau eine Justiereinrichtung vorgesehen. Dies bedeutet, dass nur die Position eines der Umlenkräder verändert werden kann.

Bei einer weiteren vorteilhaften Ausführungsform der beispielhaften Transportvorrichtung weist die Vorrichtung einen Antrieb zum Antreiben des wenigstens einen Umlenkrades auf. Bei einer weiteren vorteilhaften Ausführungsform ist die Justiereinrichtung an einem jeweils zweiten Umlenkrad angeordnet. So ist es beispielsweise möglich, dass ein erstes Umlenkrad oberhalb eines zweiten Umlenkrades angeordnet ist. Vorteilhaft ist dasjenige Umlenkrad, welches oberhalb des anderen Umlenkrades angeordnet ist, angetrieben bzw. ein Antrieb greift an diesem Umlenkrad an. Das zweite Umlenkrad wird bevorzugt über das Transportmittel angetrieben.

Vorteilhaft handelt es sich bei dem Antrieb um einen elektromotorischen Antrieb.

Bei einer weiteren vorteilhaften Ausführungsform der beispielhaften Transportvorrichtung weisen beide Transporteinrichtungen entsprechende Antriebseinrichtungen auf. Dabei sind bevorzugt diese beiden elektromotorischen Antriebseinrichtungen elektronisch miteinander gekoppelt. Es wäre jedoch auch denkbar, dass lediglich eine Antriebseinrichtung vorgesehen ist und über eine mechanische Kopplungseinrichtung, wie beispielsweise eine Kopplungswelle, die andere Transporteinrichtung mitgekoppelt ist.

Bei einer weiteren vorteilhaften Ausführungsform der beispielhaften Transportvorrichtung bewegt sich das Transportmittel innerhalb einer Ebene. Bevorzugt jedoch verläuft das Transportmittel in wenigstens zwei Richtungen gekrümmt und/oder in mehreren Ebenen. Dabei handelt es sich bei der einen Richtung bevorzugt um diejenige Krümmung, welche durch die Umlenkräder verursacht wird und bei der anderen Krümmung handelt es sich um eine Krümmung, welche zu dieser erstgenannten Krümmung senkrecht steht. Vorteilhaft wird das Transportmittel abschnittsweise gekrümmt geführt, jedoch in unterschiedlichen Abschnitten in unterschiedliche Richtungen gekrümmt. Im Hinblick auf eine Transportkette bedeutet dies, dass zwei benachbarte Kettenglieder bezüglich einander um zwei unterschiedliche Achsen geschwenkt werden, wobei diese Schwenkachsen besonders bevorzugt senkrecht zueinander stehen.

Insbesondere bei einer derartigen Ausgestaltung, in welcher das Transportmittel in zwei Richtungen oder Ebenen gekrümmt geführt wird, ist die hier beschriebene Justiereinrichtung besonders wertvoll. In diesen Fällen ist nämlich besonders darauf zu achten, dass auf das Transportmittel keine zu hohe Spannung gelegt wird, da es sonst zu einem sehr schnellen bzw. frühzeitigen Verschleiß des Transportmittels kommen kann.

Erfindungsgemäß handelt es sich bei dem Vorspannmittel um eine Spiralfeder. Dieses Vorspannmittel kann damit bewirken, dass eine Selbstjustage des Transportmittels stattfinden kann.

Dabei kann, wie unten genauer erläutert wird, eine Federkraft dieses Vorspannmittels sehr präzise gewählt werden, um einerseits ein übermäßiges Spannen des Transportmittels zu verhindern und andererseits gleichwohl ein zu hohes Spiel des Transportmittels ebenfalls zu verhindern.

Erfindungsgemäß weist die Justiereinrichtung ein Arretiermittel auf, welches eine Rückstellung des Trägers entgegen der vorgegebenen Richtung wenigstens teilweise verhindert. Hierbei wird davon ausgegangen, dass sich das Transportmittel im Laufe der Zeit selbstständig um einen gewissen Bereich dehnt, wobei diese Dehnung durch die Justiereinrichtung ausgeglichen wird. Um auch im Arbeitsbetrieb eine Rückstellung des Trägers bzw. eine Erhöhung des Spiels des Transportmittels zu verhindern, wird die hier beschriebene Arretiereinrichtung bzw. das Arretiermittel eingesetzt.

Erfindungsgemäß weist dieses Arretiermittel einen Ratschenmechanismus auf. Das Arretiermittel weist ein Zahnrad auf, in welches wiederumeine Gegenverzahnung eingreift, um so bestimmte durch das Vorspannmittel gehaltene bzw. erreichte Positionen zu halten. Das Arretiermittel ist lösbar und insbesondere manuell lösbar. So kann beispielsweise bei einem Einwechseln des Transportmittels auch der Träger wieder zurückgestellt werden.

Erfindngsgemäß weist die Justiervorrichtung ein weiteres Vorspannmittel zum Belasten des Arretiermittels bzw. eines Elements des Arretiermittels auf. Als weiteres Vorspannmittel kann insbesondere, aber nicht ausschließlich, eine weitere Feder dienen.

Auf diese Weise ist bevorzugt ein weiterer Vorspannmechanismus vorgesehen.

Bei einer weiteren vorteilhaften Ausführungsform der beispielhaften Transportvorrichtung ist das umlaufende Transportmittel eine Transportkette. Vorteilhaft sind an dieser Kette Halteelemente zum Halten der Objekte bzw. der Kästen angeordnet. Dabei können diese Halteelemente aus Kunststoff sein. Bei einer bevorzugten Ausführungsform sind diese Halteelemente wenigstens teilweise elastisch bzw. weisen elastische Abschnitte auf. Dabei ist es möglich, dass diese Halteelemente lösbar an den Kettenelementen angeordnet sind.

Vorteilhaft sind die Halteelemente an Trägern angeordnet. Diese Träger können dabei ebenfalls aus Kunststoff hergestellt sein. Auch die Träger sind bevorzugt an der besagten Kette angeordnet.

Bei einer weiteren vorteilhaften Ausführungsform der beispielhaften Transportvorrichtung weisen die Halteelemente in Richtung der Objekte weisende Vorsprünge auf. Dabei sind besonders bevorzugt diese einzelnen Vorsprünge biegbar. Vorteilhaft sind zwischen den einzelnen Vorsprüngen Spalte ausgebildet. Die zu transportierenden Objekte können bevorzugt zwischen den Halteelementen zweier gegenüberliegender Transportmittel gefördert werden.

Bei einer weiteren vorteilhaften Ausführungsform spannt das Spannmittel den Träger mit einer Kraft vor, welche kleiner ist als 200N, bevorzugt kleiner als 150N, bevorzugt kleiner als 100N, bevorzugt kleiner als 60N und besonders bevorzugt kleiner als 50N. Bei einer weiteren bevorzugten Ausführungsform spannt das Spannmittel den Träger mit einer Kraft vor, welche größer ist als 10N, bevorzugt größer als 20N.

Wie oben erwähnt ist dabei die Größe dieser Kraft sehr wichtig. In aufwändigen Untersuchungen konnten die oben genannten Kraftbereiche ermittelt werden. Diese sind besonders geeignet, um einerseits den Verschleiß an der Kette gering zu halten und andererseits das Spiel zwischen den Kettengliedern und dem Antriebsrad gering zu halten.

Vorteilhaft transportieren die Ketten bzw. die Transportmittel die Objekte auch in einer vertikalen Richtung bzw. mit einer Richtungskomponente in vertikaler Richtung. In diesem Falle soll insbesondere in einem unteren Bereich des Transportmittels dieses ein gewisses Spiel aufweisen.

Bei einer weiteren vorteilhaften Ausführungsform ist der Träger, an dem das Umlenkrad drehbar angeordnet ist in einer geradlinigen Richtung bewegbar. Auf diese Weise kann in besonders einfacher Weise der Träger bewegt werden und das Transportmittel nachjustiert werden. Bevorzugt wird dieser Träger gegenüber einem Hauptträger nachjustiert und insbesondere gegenüber dem Hauptträger, an dem auch das Transportmittel selbst angeordnet ist.

Erfindungsgemäß weist die Justiereinrichtung ein drehbares Stellglied auf, welches mechanisch auf den Träger wirkt. Dabei ist dieses drehbare Stellglied exzentrisch gelagert, so dass bei einer Drehung des Stellglieds um die Drehachse der Träger bewegt werden kann. Daher wird durch die Drehbewegung des Stellglieds eine Bewegung des Trägers ausgelöst. Wie gesagt handelt es sich bei dem Stellglied um einen um eine Drehachse gelagerten drehbaren Körper, der exzentrisch gelagert ist. Das oben erwähnte Vorspannmittel wirkt auf dieses Stellglied ein und drängt es in einer vorgegebenen Richtung. Da das Stellglied wiederum auf den Träger wirkt, wirkt sich damit das Vorspannmittel auf die Bewegung des Trägers aus.

Eine nicht erfindungsgemäße Ausführungsform einer Transporteinrichtung zum Transportieren von Objekten weist ein umlaufendes Transportmittel auf, welches zum Transportieren der Objekte dient, wobei dieses umlaufende Transportmittel um wenigstens zwei Umlenkräder geführt ist und wobei wenigstens eine Justiereinrichtung vorgesehen ist, um eine Position wenigstens eines dieser Transporträder bzw. Umlenkräder zu justieren. Erfindungsgemäß weist diese Justiereinrichtung einen verschiebbaren Träger auf, an welchem das Umlenkrad drehbar angeordnet ist, sowie ein Stellglied, welches zum Verstellen dieses verschiebbaren Trägers dient, wobei das Stellglied als ein exzentrisch drehbar gelagertes Stellglied ausgeführt ist, welches bei einer entsprechenden Drehbewegung auf diesen Träger wirkt.

Bei dieser nicht erfindungsgemäßen Ausführungsform kann gegebenenfalls auf das oben erwähnte Spannmittel verzichtet werden. Weiterhin weist die Justiereinrichtung bevorzugt ein Arretiermittel auf, welches eine Rückstellung des Trägers entgegen der vorgegebenen Richtung wenigstens teilweise verhindert.

Eine weitere nicht erfindungsgemäße Ausführungsform einer Transporteinrichtung zum Transportieren von Objekten weist ein umlaufendes Transportmittel auf, welches zum Transportieren der Objekte dient, wobei dieses umlaufende Transportmittel um wenigstens zwei Umlenkräder geführt ist und wobei wenigstens eine Justiereinrichtung vorgesehen ist, um eine Position wenigstens eines dieser Transporträder bzw. Umlenkräder zu justieren.

Die Justiereinrichtung dieser nicht erfindungsgemäßen Ausführungsform weist einen verschiebbaren Träger auf, an welchem das Umlenkrad drehbar angeordnet ist, sowie ein erstes Spannmittel, welches diesen Träger in einer vorgegebenen Richtung vorspannt. Weiterhin weist die Justiereinrichtung ein Arretiermittel auf, welches eine Rückstellung des Trägers entgegen der vorgegebenen Richtung wenigstens teilweise verhindert.

Es wird daher auch hinsichtlich der nicht erfindungsgemäßen Transporteinrichtung vorgeschlagen, dass einerseits ein Vorspannelement vorgesehen ist, das den Träger n einer bestimmten Richtung drängt, andererseits jedoch auch das Arretiermittel, welches eine Rückstellung dieses Trägers entgegen der Drängrichtung verhindert.

Die hier beschriebene nicht erfindungsgemäße Transporteinrichtung kann insbesondere für umlaufende Transportmittel und insbesondere für Ketten oder Bänder Anwendung finden. Vorteilhaft ist die Transporteinrichtung in der oben beschriebenen Weise ausgestaltet.

Hier nicht als erfindungsgemäß beansprucht ist weiterhin eine Vorrichtung zum Reinigen von Objekten und insbesondere von Getränkekästen dargestellt. Diese Vorrichtung weist dabei wenigstens eine beispielhafte Transporteinrichtung der oben beschriebenen Art auf. Weiterhin weist die Vorrichtung eine Beaufschlagungseinrichtung auf, um die Objekte während ihres Transports mit einem fließfähigen und insbesondere einem flüssigen Reinigungsmittel zu beaufschlagen. Bei einer weiteren vorteilhaften Ausführungsform weist die beispielhafte Vorrichtung ein Flüssigkeitsbad auf, durch welches die Objekte wenigstens zeitweise gefördert werden. Bei einer weiteren vorteilhaften Ausführungsform ist wenigstens ein Abschnitt der Transporteinrichtung wenigstens zeitweise und bevorzugt dauerhaft innerhalb der Flüssigkeit dieses Tauchbades angeordnet.

Weitere Vorteile und Ausführungsformen ergeben sich aus den beigefügten Zeichnungen.

Darin zeigen:
- Fig. 1a: Eine Vorrichtung zum Reinigen von Getränkekästen (hier nicht als erfindungsgemäß beansprucht);
- Fig. 1b: Eine Draufsicht auf die in Fig. 1a gezeigte Vorrichtung (hier nicht als erfindungsgemäß beansprucht);
- Fig. 2a - 2d: Vier Darstellungen einer Transportvorrichtung zum Transportieren von Objekten;
- Fig. 3a, 3b: Zwei Darstellungen einer Transporteinrichtung;
- Fig. 4: Eine Detailansicht einer erfindungsgemäßen Justiereinrichtung;
- Fig. 5: Eine Draufsicht auf eine Transporteinrichtung;
- Fig. 6: Eine Schnittdarstellung der in Fig. 5 gezeigten Umlenkeinrichtung;
- Fig. 7: Eine Schnittdarstellung der in Fig. 4 gezeigten Justiereinrichtung.

Fig. 1a zeigt eine Vorrichtung 100 zum Reinigen von Getränkekästen 10. Dabei werden die Getränkekästen hier auf der linken Seite zugeführt und gelangen zunächst in ein Tauchbad 102. Bei diesem Tauchbad 102 handelt es sich um ein turbulentes Tauchbad I, durch welches zunächst die Getränkekästen 10 gefördert werden. Das Bezugszeichen 1 kennzeichnet eine Transportvorrichtung, welche hier als Aufwärtswender ausgeführt ist. welche die Getränkekästen einerseits um 180 Grad wendet und andererseits auch auf eine höhere Stufe fördert.

In diesem mittleren Bereich II findet die Hauptreinigung der Getränkekästen statt. Hierzu werden die Getränkekästen mit einem Reinigungsmittel beaufschlagt bzw. besprüht. Das Bezugszeichen 104 kennzeichnet eine Transporteinrichtung, wie hier ein Transportband, welches sich an die Transportvorrichtung 1 anschließt. An dieses Transportband 104 schließt sich eine zweite Transporteinrichtung 1 an. Die Bezugszeichen 110 und 112 kennzeichnen Sprüheinrichtung bzw. Beaufschlagungseinrichtungen, hier Sprühdüsen, welche die Getränkekästen mit Flüssigkeit beaufschlagen. Diese Beaufschlagungseinrichtungen sind bevorzugt zumindest teilweise stationär angeordnet. In dem Bereich III findet bevorzugt eine Laugenendreinigung statt. Das Bezugszeichen IV kennzeichnet eine Abtropfzone und das Bezugszeichen V eine Nachspritzung mit Frischwasser. Das Bezugszeichen VI kennzeichnet eine Abtropfzone.

Die Getränkekästen werden dabei mittels einer weiteren Transporteinrichtung, wie eines Transportbandes 106, wieder aus der Vorrichtung abgeführt. Man erkennt, dass die untere Transportvorrichtung1 teilweise unterhalb des Flüssigkeitsniveaus 102 liegt. Insbesondere für diese Transporteinrichtung 1 ist eine manuelle Justierung relativ aufwändig.

Fig. 1b zeigt eine Draufsicht auf die in 1a gezeigte Vorrichtung. Man erkennt auch hier wieder die Getränkekästen 10, welche innerhalb des Flüssigkeitskanals hier von links nach rechts gefördert werden. Dabei ist eine Beaufschlagungseinrichtung 116 vorgesehen, welche eine Strömung innerhalb des mittleren Teils des Flüssigkeitskanals erzeugt. Man erkennt hier, dass die Transportvorrichtung 1 eine erste Transporteinrichtung 2 und eine zweite Transporteinrichtung 4 aufweist, zwischen denen die Getränkekästen 10 aufgenommen werden.

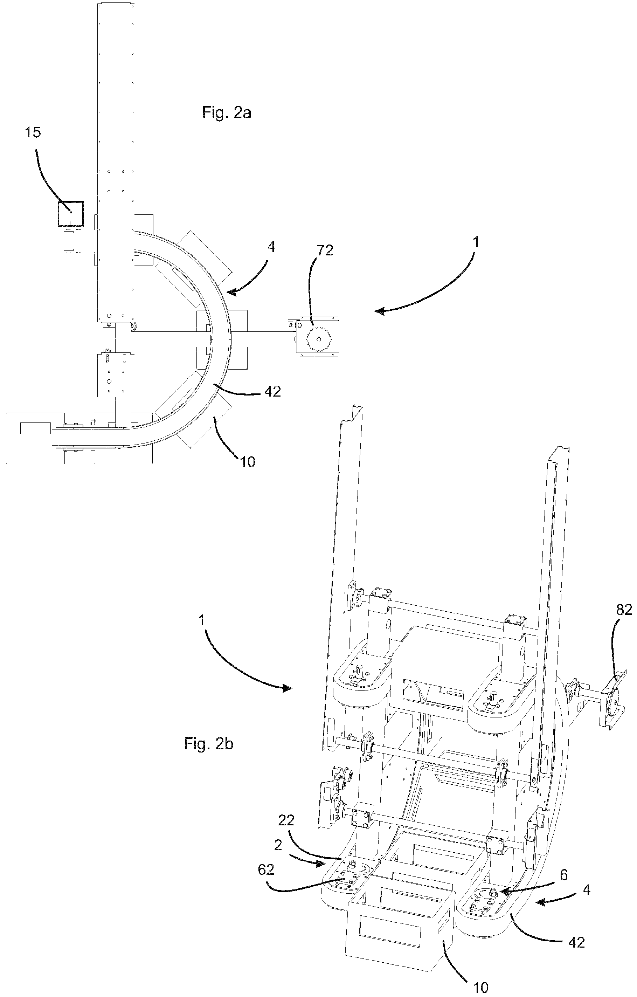

Figur 2a zeigt eine Seitenansicht einer Transportvorrichtung 1. Man erkennt hier wieder die Getränkekästen 10, die zwischen der hier dargestellten Transporteinrichtung 4 und einer weiteren (dahinterliegenden und daher nicht sichtbaren) Transporteinrichtung gefördert werden. Das Bezugszeichen 42 kennzeichnet ein umlaufendes Transportmittel, welches Bestandteil der Transporteinrichtung 4 ist. An diesem Transportmittel bzw. dieser Transportkette können Haltemittel angeordnet sind, welche wie oben erwähnt elastisch ausgeführt sind, und welche zum sicheren Halten der Getränkekästen 10 dienen. Das Bezugszeichen 15 kennzeichnet eine Antriebseinrichtung, welche zum Antreiben des umlaufenden Transportmittels 42 dient.

An der (nicht gezeigten) weiteren Transporteinrichtung 2 ist ebenfalls eine derartige Antriebseinrichtung vorgesehen. Diese können elektronisch miteinander gekoppelt bzw. synchronisiert sein.

Das Bezugszeichen 82 kennzeichnet eine Stelleinrichtung, mit der ein seitlicher Abstand zwischen den Transporteinrichtungen 2 und 4 verändert werden kann. Auf diese Weise kann eine Einstellung auf unterschiedliche Kastenbreiten erfolgen.

Fig. 2b zeigt eine weitere Darstellung einer Transportvorrichtung. Bei dieser Darstellung sind nun beide Transporteinrichtungen 2 und 4 erkennbar, welche die Getränkekästen 10 zwischen sich aufnehmen. Das Bezugszeichen 62 kennzeichnet den verschiebbaren Träger, der Bestandteil der Justiereinrichtung 6 ist. Auch ist hier die Verstelleinrichtung 82 dargestellt, welche zur seitlichen Verstellung der beiden Transporteinrichtungen 2 und 4 dient.

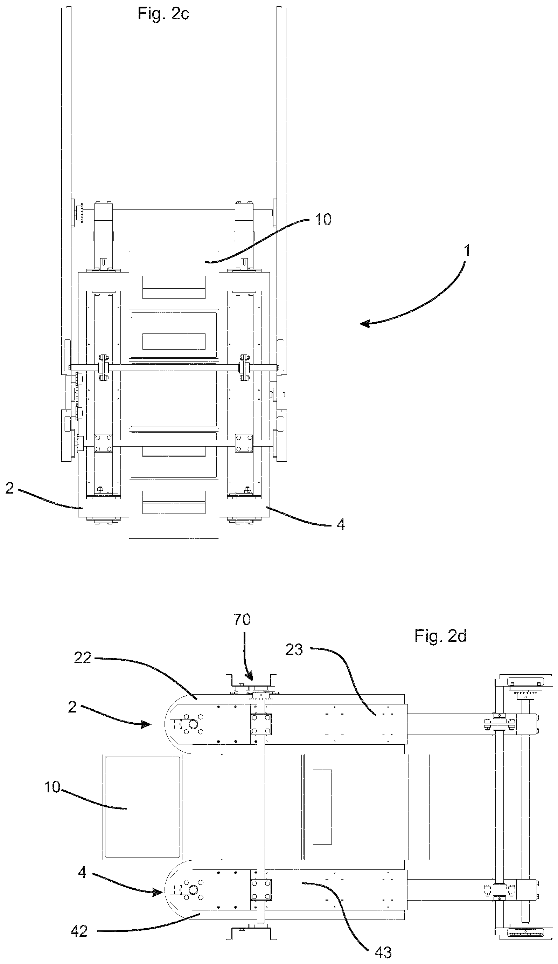

Figur 2c zeigt eine vordere Ansicht einer Transportvorrichtung 1. Auch hier sind die beiden Transporteinrichtungen 2 und 4 erkennbar, welche die Getränkekästen 10 zwischen sich aufnehmen.

Fig. 2d zeigt eine Draufsicht von oben auf die Transporteinrichtung. Hier ist auch der in seiner Gesamtheit mit 70 bezeichnete Stellantrieb erkennbar, der einen seitlichen Abstand zwischen den beiden Transporteinrichtungen 2 und 4 ändert. Die Bezugszeichen 22 und 42 beziehen sich auf die umlaufenden Transportmittel, die Transportketten, an denen (nicht gezeigte) Halteeinrichtungen zum Halten der Getränkekästen 10 angeordnet sind. Die Bezugszeichen 23 und 43 kennzeichnen jeweils einen oberen Träger, der zum Tragen der umlaufenden Transportmittel d.h. der Transportketten dient.

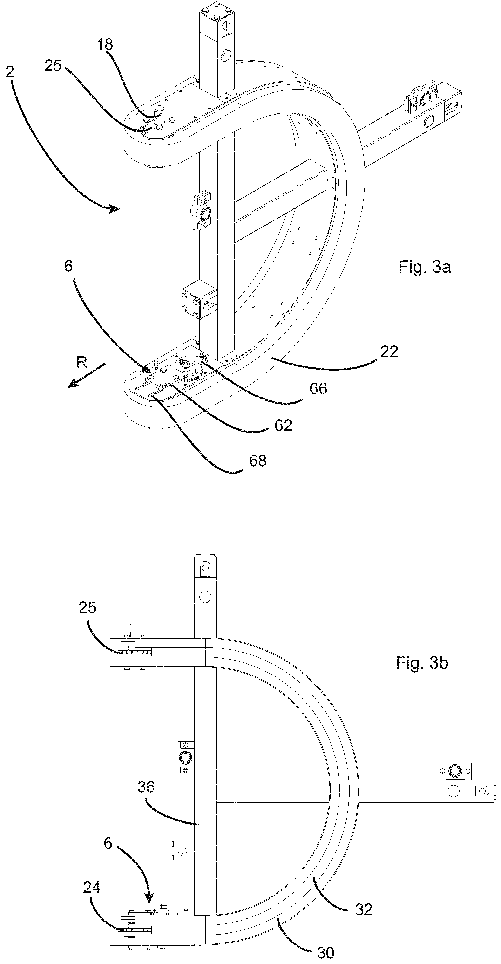

Figur 3a zeigt eine Darstellung einer Transporteinrichtung 2. Auch hier ist wieder das umlaufende Transportmittel 22 erkennbar. Das Bezugszeichen 25 kennzeichnet ein oberes Umlenkrad, um welches das Transportmittel 22 umgelenkt wird. Das Bezugszeichen 18 kennzeichnet einen drehbaren Bolzen, an dem eine Antriebseinrichtung ansetzen kann, um das Umlenkrad 25 anzutreiben.

Das Bezugszeichen 6 kennzeichnet in seiner Gesamtheit die Justiereinrichtung zum Nachjustieren oder Nachspannen des Transportmittels 22. Dabei ist ein verschiebbarer Träger 62 vorgesehen, der in der Richtung R verschiebbar ist, um so die Kettenspannung leicht zu erhöhen und/oder um ein Spiel zwischen den einzelnen Kettengliedern zu verringern. Das Bezugszeichen 66 kennzeichnet ein Ratschen- bzw. Klinkenelement, welches, wie unten genauer erläutert, eine Rückstellung des Verschiebeelements bzw. des verschiebbaren Trägers 62 verhindert. Das Bezugszeichen 68 kennzeichnet eine Längsnut, innerhalb derer der Träger 62 verschiebbar ist.

Fig. 3b zeigt eine Seitenansicht der in Fig. 3a gezeigten Transporteinrichtung. Hier ist auch der Träger 30 erkennbar, der zum Führen des Transportmittels (nicht gezeigt) dient. Das Bezugszeichen 32 kennzeichnet eine Transportnut, innerhalb derer Führungselemente des Transportmittels laufen können. Durch die hier gezeigte Ausgestaltung, in der die Transportkette sowohl in einer Richtung senkrecht zur Figurenebene gekrümmt verläuft, nämlich um die Umlenkräder 24 und 25, als auch bezüglich ihrer Erstreckungsrichtung, das heißt innerhalb der Figurenebene wird erkennbar, dass eine zu hohe Kettenspannung verhindert werden sollte, da ansonsten die Reibungsverluste insbesondere in dem unteren Bereich der Nut 32 zu hoch wären. Das Bezugszeichen 36 kennzeichnet einen Hauptträger zum Tragen des Trägers 30.

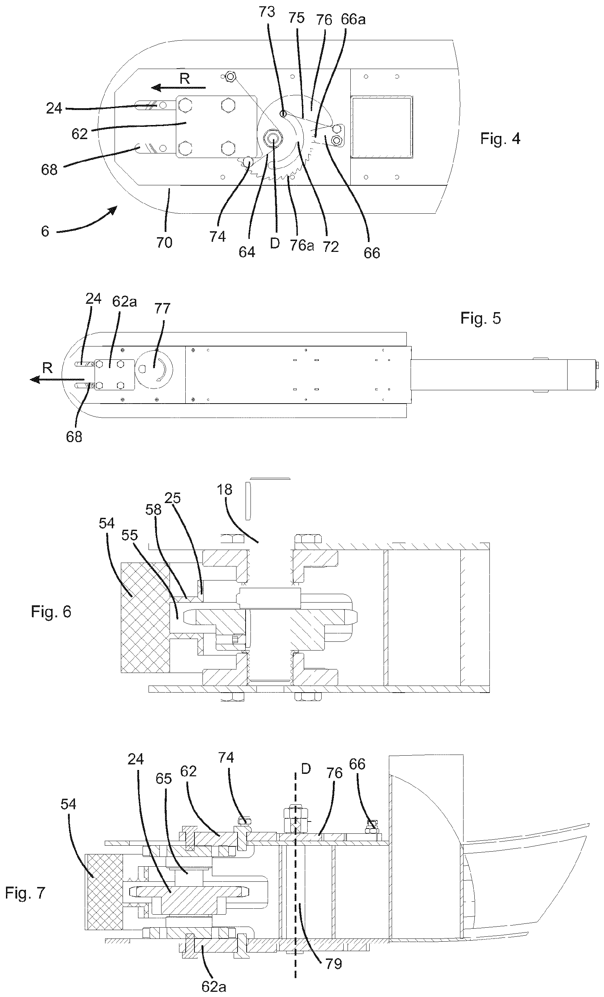

Fig. 4 zeigt eine Detaildarstellung der erfindungsgemäßen Justiereinrichtung 6. Hier ist wieder der verschiebbare Träger 62 dargestellt, an welchem (nicht gezeigt) das Umlenkrad 24 angeordnet ist. Dieser Träger 62 ist in der Richtung R in den Nuten 68 verschiebbar. Das Umlenkrad 24 ist durch die Nuten 68 erkennbar. Das Bezugszeichen 70 kennzeichnet einen Hauptträger, dem gegenüber der Träger 62 verschiebbar angeordnet ist. Das Bezugszeichen 76 kennzeichnet ein Stellglied, welches als exzentrisch bezüglich einer Drehachse D gelagertes Rad ausgeführt ist.

Das Bezugszeichen 64 kennzeichnet ein Spannmittel, welches als Spiralfeder ausgeführt ist, und welches an einen Bolzen 74 angelenkt ist, der wiederum einteilig mit dem Stellglied 76 verbunden ist. Das Spannmittel 64 bewirkt, dass sich das drehbare Stellglied 76 hier entgegen dem Uhrzeigersinn bewegt und auf diese Weise den verschiebbaren Träger 62 nach links drängen würde.

Das Bezugszeichen 76a bezieht sich auf eine Außenverzahnung, die an einem Stellglied 76 angeordnet ist. In diese Außenverzahnung kann eine Verzahnung 66a eines Sperrglieds 66 eingreifen. Dieses Sperrglied wiederum wird von einem weiteren Spannmittel 75 belastet und zwar derart, dass eine Rückstellung des Stellglied 76, das heißt eine Drehung im Uhrzeigersinn, verhindert wird. Auf diese Weise kann eine einmal erreichte Verstellung des Trägers 62 nach rechts nicht mehr bei geänderten Belastungen rückgängig gemacht werden.

Bei Eintauschen eines Transportmittels ist es erfindungsgemäß jedoch möglich, diesen Ratschenmechanismus 68 zu lösen, um so das Stellglied 76 wieder in seine Ausgangsposition zu bringen. Das Bezugszeichen 72 kennzeichnet eine Kreisnut, in welcher ein Bolzen 73 läuft, um die Drehbewegung des Stellglieds 76 definiert zu führen. Auch dient dieser Bolzen 73 als Endanschlag, um eine Endposition des Stellglieds 76 zu definieren.

Fig. 5 zeigt eine untere Ansicht der in den oberen Figuren gezeigten Transporteinrichtung.

Auch hier ist wieder ein Stellglied 77 vorgesehen, welches exzentrisch gelagert ist, in der gleichen Weise wie das in Fig. 4 gezeigte Stellglied 76. Dieses Stellglied ist mechanisch mit dem oben erwähnten Stellglied 76 gekoppelt. Das Bezugszeichen 62a kennzeichnet auch hier einen verschiebbaren Träger, der innerhalb der Nuten 68 und in Richtung R erfindungsgemäß verschiebbar ist. Dabei ist es möglich und bevorzugt, dass die Bewegung des Trägers 62a mit der Bewegung des Trägers 62 gekoppelt ist.

Fig. 6 zeigt eine Schnittdarstellung der Transporteinrichtung im Bereich des oberen Antriebs. Hier ist wieder die Antriebswelle 18 erkennbar, an der das Umlenkrad 25 angeordnet ist. Das Bezugszeichen 54 kennzeichnet ein Halteelement, welches zum Halten der Getränkekästen (vgl. Fig. 1) dient. Dieses Halteelement ist dabei an einem Träger 55 angeordnet und dieser wiederum an der Kette, welche um das Umlenkrad 25, welches hier als Zahnrad ausgeführt ist, umläuft. Dieser Träger 55 wird dabei in der in Fig. 3b gezeigten Nut 32 geführt.

Fig. 7 zeigt eine Schnittdarstellung der in Fig. 4 gezeigten Justiereinrichtung. Auch hier ist wieder der verschiebbare Träger 62 erkennbar, der durch das Stellglied 76 in seiner Position verändert werden kann. Das Bezugszeichen D kennzeichnet wiederum die Drehachse bezüglich derer das Stellglied 76 drehbar ist. Genauer ist hier auch eine Drehwelle 79 vorgesehen.

Das Bezugszeichen 65 kennzeichnet die Welle, an der das Zahnrad 24 drehbar angeordnet ist.

## Patentansprüche

1. Justiereinrichtung (6) zum Spannen von Transportmitteln (22, 42) einer Transportvorrichtung (1), wobei die Justiereinrichtung (6) mit den Transportmitteln (22, 42) verbindbar ist, mit einer ersten Transporteinrichtung (2), welche ein erstes umlaufendes Transportmittel (22) aufweist sowie einer zweiten Transporteinrichtung (4), welche ein zweites umlaufendes Transportmittel (42) aufweist, wobei die zu transportierenden Güter (10) zwischen diesen umlaufendes Transportmitteln (22, 42) aufnehmbar sind, und von diesen transportiert zu werden, wobei jedes dieser umlaufenden Transportmittel (22, 42) um wenigstens zwei Umlenkräder (24, 44) geführt ist ,
wobei die Justiereinrichtung (6) einen Träger (62) umfasst, an dem ein Umlenkrad (24) drehbar anordenbar ist, wobei dieser Träger (62) gegenüber einem Basisträger (70) verschiebbar angeordnet ist, und die Justiereinrichtung (6) ein bewegbares Stellglied (76) aufweist, welches mechanisch auf diesen Träger (62) einwirkt,
wobei die Justiereinrichtung weiterhin ein erstes Spannmittel (64) aufweist, welches das Stellglied (76) in einer vorgegebenen Spannrichtung (R) belastet, wobei die Justiereinrichtung ein Arretiermittel (66) aufweist, welches eine Rückstellung des Trägers (62) entgegen der vorgegebenen Spannrichtung (R) wenigstens teilweise verhindert, und wobei das erste Spannmittel (64) den Träger (62) in der vorgegebenen Spannrichtung (R) vorspannt,
**dadurch gekennzeichnet, dass**
der Träger (62) in der Spannrichtung (R) in Nuten (68) verschiebbar ist, undwobei das Umlenkrad (24) durch die Nuten (68) erkennbar ist, wobei das Stellglied (70) als exzentrisch bezüglich einer Drehachse (D) gelagertes Rad ausgeführt ist, und wobei
das Spannmittel (64), welches als Spiralfeder ausgeführt ist, und welches an einen Bolzen (74) der Justiereinrichtung (6) angelenkt ist, der wiederum einteilig mit dem
Stellglied (76) verbunden ist, bewirkt, dass sich das drehbare Stellglied (76) entgegen dem Uhrzeigersinn bewegt und auf diese Weise den verschiebbaren Träger (62) nach links , also in der Spannrichtung (R) drängt, und wobei
eine Außenverzahnung (76a) an dem Stellglied (76) angeordnet ist, wobei in diese Außenverzahnung (76a) eine Verzahnung (66a) des Arretiermittels (66) eingreift, und wobei das Arretiermittel (66) wiederum von einem weiteren Spannmittel (75) der Justiervorrichtung (6) belastet wird und zwar derart, dass eine Rückstellung des Stellglied (76), das heißt eine Drehung im Uhrzeigersinn, verhindert wird, sodass auf diese Weise eine einmal erreichte Verstellung des Trägers (62), also entgegen der Spannrichtung (R) nach rechts nicht mehr bei geänderten Belastungen rückgängig gemacht werden, und
bei Eintauschen eines Transportmittels es jedoch möglich ist, diesen Ratschenmechanismus zu lösen, um so das Stellglied (76) wieder in seine Ausgangsposition zu bringen, und wobei das Stellglied (76) eine Kreisnut (72) aufweist, in welcher ein Bolzen (73) der Justiereinrichtung (6) läuft, um die Drehbewegung des Stellglieds (76) definiert zu führen, wobei der Bolzen (73) als Endanschlag dient, um eine Endposition des Stellglieds (76) zu definieren.

2. Justiereinrichtung (6) nach Anspruch 1, **dadurch gekennzeichnet, dass**
das Spannmittel den Träger (62) mit einer Kraft vorspannt, welche kleiner ist als 200N, bevorzugt kleiner als 150N, bevorzugt kleiner als 100N, bevorzugt kleiner als 80N, bevorzugt kleiner als 60N und bevorzugt kleiner als 50N und/oder das Spannmittel (64) den Träger (62) mit einer Kraft vorspannt, die größer ist als 10N, bevorzugt größer als 20N.

3. Justiereinrichtung (6) nach wenigstens einem der vorangegangenen Ansprüche,
**dadurch gekennzeichnet, dass**
der Träger (62) in einer geradlinigen Richtung verschiebbar ist.

## Claims

1. Adjustment device (6) for tensioning transport means (22, 42) of a transport device (1), wherein the adjustment device (6) can be connected to the transport means (22, 42), with a first transport device (2) which has a first circulating transport means (22) and a second transport device (4) which has a second circulating transport means (42), wherein the goods (10) to be transported can be received between these circulating transport means (22, 42) and transported by them, wherein each of these circulating transport means (22, 42) is guided around at least two deflection wheels (24, 44),
wherein the adjustment device (6) comprises a carrier (62) on which a deflection wheel (24) can be rotatably arranged, wherein this carrier (62) is arranged so as to be displaceable relative to a base carrier (70), and the adjustment device (6) has a movable actuator (76) which acts mechanically on this carrier (62),
wherein the adjustment device further comprises a first tensioning means (64) which loads the actuator (76) in a predetermined tensioning direction (R), wherein the adjustment device comprises a locking means (66) which at least partially prevents the carrier (62) from being reset against the predetermined tensioning direction (R), and wherein the first tensioning means (64) pretensions the carrier (62) in the predetermined tensioning direction (R),
**characterized in that**
the carrier (62) can be displaced in the tensioning direction (R) in grooves (68), and wherein the deflection wheel (24) is recognizable through the grooves (68), wherein the actuator (70) is designed as a wheel mounted eccentrically with respect to an axis of rotation (D), and wherein
the tensioning device (64), which is designed as a spiral spring and is connected to a bolt (74) of the adjustment device (6), which in turn is connected in one piece to the actuator (76), causes the rotatable actuator (76) to move counterclockwise, thereby pushing the movable carrier (62) to the left, i.e. in the tensioning direction (R), and wherein
an external toothing (76a) is arranged on the actuator (76), wherein a toothing (66a) of the locking means (66) engages in this external toothing (76a), and wherein the locking means (66) is in turn loaded by a further tensioning means (75) of the adjusting device (6) in such a way that a return of the actuator (76), i.e., clockwise rotation, is prevented, so that in this way, once the carrier (62) has been adjusted, i.e., to the right against the tensioning direction (R), this adjustment can no longer be reversed when the loads change, and
when a transport means is replaced, it is possible to release this ratchet mechanism in order to return the actuator (76) to its initial position, and wherein the actuator (76) has a circular groove (72) in which a bolt (73) of the adjustment device runs in order to guide the rotational movement of the actuator (76) in a defined manner, wherein the bolt (73) serves as an end stop to define an end position of the actuator (76).

2. Adjustment device (6) according to claim 1,
**characterized in that**
the tensioning device preloads the carrier (62) with a force that is less than 200 N, preferably less than 150 N, preferably less than 100 N, preferably less than 80 N, preferably less than 60 N, and preferably less than 50 N, and/or the tensioning means (64) pretensions the carrier (62) with a force greater than 10 N, preferably greater than 20 N.

3. Adjusting device (6) according to at least one of the preceding claims, **characterized in that**
the carrier (62) is displaceable in a straight line.

## Revendications

1. Equipement d'ajustement (6) pour tendre des moyens de transport (22, 42) d'un dispositif de transport (1), dans lequel l'équipement d'ajustement (6) peut être relié aux moyens de transport (22, 42), avec un premier équipement de transport (2), qui présente un premier moyen de transport (22) circulant ainsi qu'un second équipement de transport (4) qui présente un second moyen de transport (42) circulant, dans lequel les marchandises (10) à transporter peuvent être réceptionnées entre ces moyens de transport (22, 42) circulants, et être transportées par ceux-ci, dans lequel chacun de ces moyens de transport (22, 42) circulants est guidé autour d'au moins deux roues de renvoi (24, 44),
dans lequel l'équipement d'ajustement (6) comprend un support (62) sur lequel une roue de renvoi (24) peut être disposée de manière rotative, dans lequel ce support (62) est disposé de manière à pouvoir se déplacer par rapport à un support de base (70), et l'équipement d'ajustement (6) présente un actionneur (76) mobile qui agit mécaniquement sur ce support (62),
dans lequel l'équipement d'ajustement présente en outre un premier moyen de tension (64) qui sollicite l'actionneur (76) dans une direction de tension (R) prédéfinie, dans lequel l'équipement d'ajustement présente un moyen d'arrêt (66) qui empêche au moins partiellement un rappel du support (62) à l'encontre de la direction de tension (R) prédéfinie, et dans lequel le premier moyen de tension (64) précontraint le support (62) dans la direction de tension (R) prédéfinie,
**caractérisé en ce que**
le support (62) est déplaçable dans des rainures (68) dans la direction de tension (R), et dans lequel la roue de renvoi (24) est reconnaissable par les rainures (68), dans lequel l'actionneur (70) est conçu en tant que roue montée excentriquement par rapport à un axe de rotation (D), et dans lequel
le moyen de tension (64), qui est conçu en tant que ressort hélicoïdal, et qui est articulé sur un axe (74) de l'équipement d'ajustement (6), qui est lui-même relié d'une seule pièce à l'actionneur (76), a pour effet que l'actionneur (76) rotatif bouge en sens inverse des aiguilles d'une montre et pousse ainsi le support (62) coulissant vers la gauche, c'est-à-dire dans la direction de tension (R), et dans lequel
une denture extérieure (76a) est disposée sur l'actionneur (76), dans lequel une denture (66a) du moyen d'arrêt (66) s'engrène dans cette denture extérieure (76a), et dans lequel le moyen d'arrêt (66) est à son tour sollicité par un autre moyen de tension (75) de l'équipement d'ajustement (6) et ce, de telle sorte qu'un rappel de l'actionneur (76), c'est-à-dire une rotation dans le sens des aiguilles d'une montre, soit empêché, de sorte que de cette façon un réglage une fois atteint du support (62), c'est-à-dire à l'encontre de la direction de tension (R) vers la droite, ne soit plus annulé en cas de sollicitations modifiées, et
toutefois, lors de l'échange d'un moyen de transport, il est possible de libérer ce mécanisme à cliquet pour ramener ainsi l'actionneur (76) dans sa position initiale, et dans lequel l'actionneur (76) présente une rainure circulaire (72), dans laquelle un axe (73) de l'équipement d'ajustement (6) tourne pour guider de manière définie le mouvement de rotation de l'actionneur (76), dans lequel l'axe (73) sert de butée d'extrémité pour définir une position d'extrémité de l'actionneur (76).

2. Equipement d'ajustement (6) selon la revendication 1,
**caractérisé en ce que**
le moyen de tension précontraint le support (62) avec une force qui est inférieure à 200 N, de préférence inférieure à 150 N, de préférence inférieure à 100 N, de préférence inférieure à 80 N, de préférence inférieure à 60 N et de préférence inférieure à 50 N et/ou le moyen de tension (64) précontraint le support (62) avec une force qui est supérieure à 10 N, de préférence supérieure à 20 N.

3. Equipement d'ajustement (6) selon au moins l'une des revendications précédentes,
**caractérisé en ce que**
le support (62) est déplaçable dans une direction rectiligne.
